# DEMANDE DE BREVET EUROPEEN

(11) **EP 1 803 919 A1**
(43) Date de publication de la demande: **04.07.2007**
(21) Numéro de dépôt: 06301235.5
(22) Date de dépôt: 12.12.2006
(51) Int. Cl.: F02D 41/40

(54) **Procédé d'injection de carburant pour augmenter les performances d'un moteur à pleine charge**

(30) Priorité: 28.12.2005 FR 0513412
(71) Demandeur: Renault SAS, 92100 Boulogne Billancourt (FR)
(72) Inventeur: Defransure, Fabien, 92290 Chatenay Malabry (FR); Hardy, Jean-Paul, 91410 Saint Cyr Sur Dourdan (FR); Musq, Gregory, 91510 Lardy (FR)

(57) **Abrégé**

L'invention concerne un procédé d'injection de carburant dans au moins un cylindre (5) d'un moteur à combustion interne comprenant une étape d'admission et une étape de compression au cours de l'une et/ou l'autre desquelles on réalise au moins une injection auxiliaire de carburant de manière à former un prémélange homogène du carburant injecté avec l'air admis dans le cylindre (5), suivie d'une injection principale de carburant dans le cylindre (5) pour former un mélange carburé prêt à l'allumage. L'injection auxiliaire de carburant est réalisée uniquement à pleine charge, à l'exclusion des faibles charges et charges partielles, pour améliorer les performances et diminuer le bruit de combustion.

## Description

### DOMAINE TECHNIQUE AUQUEL SE RAPPORTE L'INVENTION

La présente invention concerne de manière générale les procédés d'injection de carburant dans les moteurs à combustion interne.

L'invention concerne plus particulièrement un procédé d'injection de carburant dans au moins un cylindre d'un moteur à combustion interne comprenant une étape de compression au cours de laquelle on réalise au moins une injection auxiliaire de carburant de manière à former un prémélange homogène du carburant injecté avec l'air admis dans le cylindre, suivie d'une injection principale de carburant dans le cylindre pour former un mélange carburé prêt à l'allumage.

L'invention trouve une application particulièrement avantageuse pour les moteurs à combustion interne de type diesel.

### ARRIERE-PLAN TECHNOLOGIQUE

Les performances des moteurs à combustion interne sont notamment fonctions de la richesse du mélange carburé introduit dans la chambre de combustion des moteurs et du rendement de cycle. La richesse est limitée par des seuils réglementaires d'émissions polluantes (suies en pleine charge). Pour des conditions de fonctionnement données du moteur, on définit alors la richesse admissible comme étant la richesse maximale de carburant que l'on peut admettre dans la chambre de combustion sans dépasser le seuil réglementaire d'émissions polluantes fixé.

Le document WO0061927 propose un procédé permettant de diminuer les émissions polluantes, notamment les oxydes d'azote. Dans ce document, il est proposé un procédé d'injection de carburant tel que précité, ce procédé étant réalisé quelle que soit la charge du moteur.

Un tel procédé présente l'avantage de réduire les émissions polluantes en oxydes d'azote quelle que soit la charge du moteur. Cependant, quelle que soit la charge du moteur, une partie du prémélange réalisé va pouvoir se loger dans des zones du cylindre dans lesquelles, compte tenu de sa faible richesse, elle ne pourra pas brûler. Cette partie du prémélange va donc être évacuée avec les gaz d'échappement, rejetant alors dans l'atmosphère des hydrocarbures imbrûlés et des oxydes de carbone qui sont d'autres constituants polluants. Ceci est vrai en particulier lorsque le moteur fonctionne en charge partielle et notamment en faible charge. Or, c'est justement en charge partielle et en particulier en faible charge que l'on cherche à diminuer le plus possible les émissions polluantes.

### OBJET DE L'INVENTION

Le but de la présente invention est d'améliorer le procédé d'injection en parvenant à un meilleur compromis entre les performances du moteur et les émissions polluantes générées.

À cet effet, on propose selon l'invention un procédé d'injection de carburant dans au moins un cylindre d'un moteur à combustion interne comprenant une étape d'admission et une étape de compression au cours de l'une et/ou l'autre desquelles on réalise au moins une injection auxiliaire de carburant de manière à former un prémélange homogène du carburant injecté avec l'air admis dans le cylindre, suivie d'une injection principale de carburant dans le cylindre pour former un mélange carburé prêt à l'allumage, dans lequel l'injection auxiliaire de carburant est réalisée uniquement à pleine charge, à l'exclusion des faibles charges et charges partielles.

Grâce au prémélange réalisé dans la chambre de combustion à pleine charge, les conditions thermodynamiques au moment de l'injection principale dans la chambre de combustion sont très favorables à la combustion de l'injection principale, ce qui permet d'augmenter la puissance dégagée et le rendement du moteur, toutes choses égales par ailleurs.

La présente invention participe d'une vision globale du fonctionnement du moteur dans toutes ses conditions d'utilisation, c'est-à-dire sur toute l'étendue de la charge, ou encore du couple à développer, qui lui est imposée. En ne réalisant pas de prémélange pour un fonctionnement du moteur en charge partielle et notamment en faible charge, on limite les émissions d'hydrocarbures et d'oxydes de carbone tout en conservant une puissance développée par le moteur suffisante pour répondre à la charge imposée. En réalisant un prémélange exclusivement pour un fonctionnement du moteur à pleine charge, on augmente le rendement et la richesse admissible et donc les performances du moteur en pleine charge, c'est-à-dire pour une phase de fonctionnement du moteur où la puissance demandée est importante et où les restrictions d'émissions polluantes (hydrocarbures imbrûlés et oxyde de carbone) hors suies sont moins importantes que pour les charges partielles.

Ainsi, pour un fonctionnement global du moteur, c'est-à-dire un fonctionnement du moteur sur un parcours où celui-ci aura été soumis à des charges partielles, notamment des faibles charges, et des pleines charges, les performances du moteur sont améliorées et les émissions polluantes limitées.

Pour des conditions de fonctionnement données du moteur, l'amélioration de la richesse admissible va de pair avec un maintien voire une amélioration du rendement de cycle. Pour des conditions de fonctionnement données du moteur, on diminue notablement le bruit de combustion en pleine charge.

D'autres caractéristiques avantageuses et non limitatives du procédé d'injection selon l'invention sont les suivantes :
- pour des conditions de fonctionnement données du moteur, on injecte une quantité totale de carburant égale à la somme des quantités de carburant injectées lors de l'injection auxiliaire et de l'injection principale, cette quantité totale engendrant un certain niveau d'émissions polluantes et étant supérieure à la quantité de carburant qui devrait être injectée en l'absence d'injection auxiliaire pour engendrer le même niveau d'émissions polluantes (suies) ;
- le moteur comportant un piston coulissant dans le cylindre et associé à un système de bielle et de manivelle relié à un vilebrequin en rotation, l'injection auxiliaire est réalisée pour un angle de vilebrequin compris entre 200° et 300° par référence au point mort haut du piston;
- la quantité de carburant injectée lors de l'injection auxiliaire est comprise entre 10 et 25 % de la quantité de carburant injectée lors de l'injection principale ;
- la richesse du prémélange issu de l'injection auxiliaire est comprise entre 0,10 et 0,20 ;
- l'injection principale est réalisée au moyen d'un injecteur débouchant dans le cylindre;
- l'injection auxiliaire est réalisée au moyen dudit injecteur débouchant dans le cylindre;
- un conduit d'admission d'air débouchant dans le cylindre, l'injection auxiliaire est réalisée au moyen d'un autre injecteur situé dans le conduit d'admission d'air ;
- l'injection auxiliaire comprend une ou plusieurs phases d'injection entrecoupées ;
- l'injection principale comprend une ou plusieurs phases d'injection entrecoupées.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Sur les dessins annexés :
- la figure 1 est une vue en coupe d'un cylindre d'un moteur ;
- la figure 2 est un diagramme représentant l'évolution de la pression et de l'énergie libérée dans la chambre de combustion en fonction de l'angle de vilebrequin du moteur.

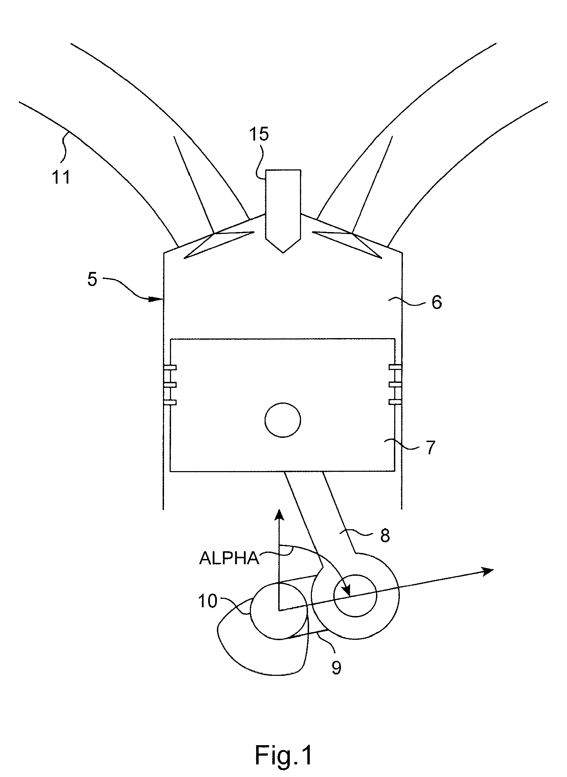

Sur la figure 1, on a représenté une partie d'un moteur à combustion interne comprenant un cylindre dans lequel coulisse un piston 7 dans un mouvement linéaire alternatif commandé par un vilebrequin 10. Le moteur à combustion interne est ici un moteur à quatre temps.

Pour des raisons de simplification, il est fait mention dans la description de l'angle de vilebrequin, mais il est clair que cet angle correspond à une position précise du piston 7 qui se déplace dans le cylindre 5 et qui est associé à un système comprenant une bielle 8 et une manivelle 9 que commande le vilebrequin 10.

La face supérieure de la tête du piston 7 et la tête du cylindre 5 délimitent une chambre de combustion 6 dans laquelle débouchent un conduit d'admission 11 d'air et un conduit d'échappement des gaz brûlés. Il est également prévu un injecteur 15 de carburant débouchant dans la chambre de combustion 6. Ici, cet injecteur 15 de carburant fait partie d'un système d'injection à rampe commune (non représenté).

Il est prévu dans le moteur un calculateur qui permet de contrôler à partir des conditions de fonctionnement du moteur la quantité de carburant injectée par l'injecteur 15 débouchant dans le cylindre 5.

Ce moteur permet la mise en oeuvre d'un procédé d'injection de carburant dans le cylindre 5 qui est décrit ci-dessous.

Le cycle de fonctionnement du moteur à quatre temps comprend classiquement des étapes d'admission, de compression, d'explosion (ou détente) et d'échappement.

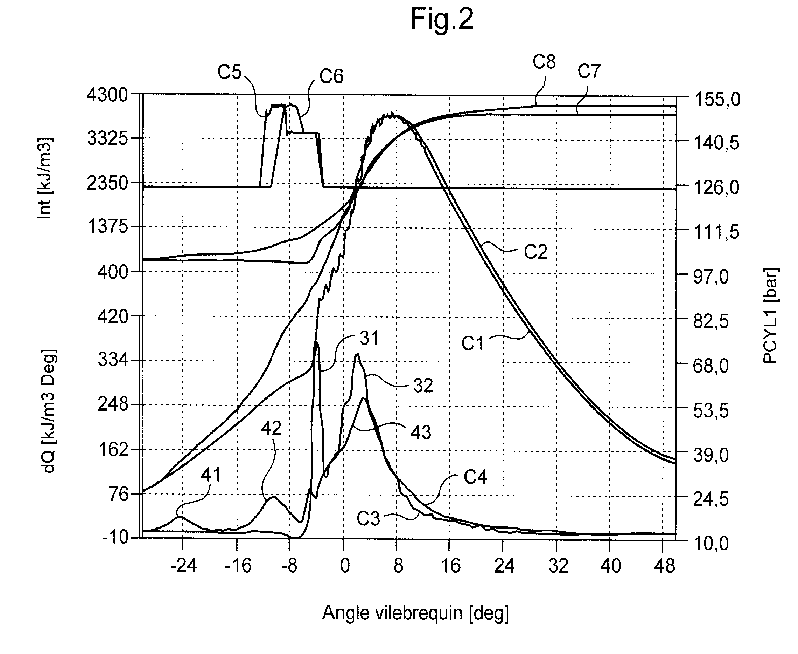

Au cours de l'étape de compression, on réalise une injection auxiliaire (ou préliminaire) de carburant de manière à former un prémélange homogène du carburant injecté avec l'air admis dans le cylindre 5. Cette injection auxiliaire est par injection directe réalisée dans le cylindre 5 au moyen de l'injecteur 15. En variante, l'injection auxiliaire peut être indirecte au moyen d'un autre injecteur situé dans le conduit d'admission d'air. L'injection auxiliaire est réalisée pour un angle ALPHA de vilebrequin 10 compris entre 200° et 300° par référence au point mort haut du piston 7 (0 ou 360°), c'est-à-dire, dans l'exemple illustré par la figure 2, entre -130° et -90° par rapport au point mort haut (situé à 0° sur la figure 2).

Pour un angle ALPHA de vilebrequin légèrement inférieur à l'angle de point mort haut, dépendant des conditions de fonctionnement (régime, etc.) selon des méthode de calcul connues de l'homme du métier et compris entre -30° et -5° sur la figure 2, on réalise une injection principale de carburant dans le cylindre 5 pour former un mélange carburé prêt à l'allumage.

L'injection principale est réalisée au moyen de l'injecteur débouchant dans le cylindre 5.

La quantité de carburant injectée lors de l'injection auxiliaire est comprise entre 10 et 20 % de la quantité de carburant injectée lors de l'injection principale. La richesse du prémélange obtenu par l'injection auxiliaire est comprise entre 0,10 et 0,20.

L'injection auxiliaire de carburant est réalisée uniquement à pleine charge, à l'exclusion des faibles charges et charges partielles. La pleine charge correspond à une sollicitation maximale du moteur où un volume de carburant admissible maximum est injecté dans la chambre de combustion 6 compte-tenu des conditions de combustion.

On injecte une quantité totale de carburant égale à la somme des quantités de carburant injectées lors de l'injection auxiliaire et de l'injection principale. Pour des conditions de fonctionnement données du moteur, la quantité totale injectée engendre un certain niveau d'émissions polluantes, notamment en suies.

Lors de l'injection auxiliaire, ou préliminaire, on obtient un mélange d'air et de carburant homogène de richesse faible. On établit ainsi une « richesse de fond de chambre » qui permet d'améliorer le mélange du carburant avec l'air lors de l'injection principale puisqu'une partie de la quantité totale de carburant est déjà mélangée lors du prémélange. Ce mélange de l'air et du carburant étant optimisé, les suies engendrées dans le cylindre 5 seront limitées.

La quantité totale injectée selon le procédé décrit ci-dessus est donc supérieure à la quantité de carburant qui devrait être injectée en l'absence d'injection auxiliaire pour engendrer le même niveau d'émissions polluantes. Le niveau d'émissions polluantes est ici fixé au maximum autorisé par la réglementation.

Ainsi, à pleine charge, la richesse admissible est augmentée par rapport à un procédé d'injection ne réalisant pas de prémélange. À pleine charge, le calculateur est programmé pour optimiser le ratio entre la quantité de carburant injectée lors de l'injection auxiliaire et la quantité de carburant injectée lors de l'injection principale pour atteindre la richesse admissible maximale. De même, ce calculateur est programmé pour optimiser pour un cycle de fonctionnement du moteur le moment où est réalisée l'injection principale et le moment où est réalisée d'injection auxiliaire (un moment correspondant à une position angulaire du vilebrequin), de manière à améliorer le rendement et à atteindre pour le moteur une performance maximale.

Comme représenté sur la figure 2, les courbes C1 et C2 montrent l'évolution de la pression PCYL1, exprimée en bars, dans la chambre de combustion 6 du moteur en fonction de l'angle du vilebrequin 10 respectivement sans et avec une injection auxiliaire de carburant permettant d'obtenir un prémélange de carburant dans la chambre de combustion 6. Les courbes C3 et C4 montrent l'évolution du dégagement d'énergie instantané dQ, exprimé en kilojoules par mètre cube par degré, à l'intérieur de cette chambre de combustion 6 en fonction de l'angle de vilebrequin 10 respectivement sans et avec injection auxiliaire de carburant. De même les courbes C7 et C8 montrent l'évolution du dégagement d'énergie intégré Int, exprimé en kilojoules par mètre cube, à l'intérieur de cette chambre de combustion 6 en fonction de l'angle de vilebrequin 10 respectivement sans et avec injection auxiliaire de carburant. Enfin les courbes C5 et C6 montrent l'évolution de la commande électrique de l'injecteur 15, en fonction de l'angle de vilebrequin 10 respectivement sans et avec injection auxiliaire de carburant.

Ici, l'injection auxiliaire est réalisée pour un angle de vilebrequin 10 de -90° par rapport au point mort haut situé à 0°.

Le prémélange issu de l'injection auxiliaire de carburant subit une phase d'oxydation lente, appelée flamme froide, observable sur la figure 2, au niveau de la première bosse 41 de la courbe C4, représentant le dégagement de l'énergie instantanée, pour un angle de vilebrequin de -24°. Cette flamme froide permet de dégager un certain niveau d'énergie observable sur la deuxième bosse 42 de la courbe C4 pour un angle de vilebrequin 10 de -8° qui permet de générer dans la chambre de combustion 6 des conditions thermodynamiques, notamment en température et en pression, favorables au contrôle de la position dans le cycle de l'auto inflammation du mélange carburé principal résultant de l'injection principale dans le prémélange.

L'injection principale est ainsi réalisée à ce moment-là, c'est-à-dire lorsque l'angle de vilebrequin 10 est situé autour de -8° au moyen de la commande électrique de l'injecteur 15 dont l'activation est représentée sur la courbe C6 par un pic. On observe que l'activation de la commande de l'injecteur 15 pour l'injection principale est réalisée, dans le cas d'un prémélange réalisé précédemment (courbe C6), un peu après l'activation de la commande de l'injecteur pour l'injection principale dans un cas sans prémélange (courbe C5). Ceci est permis du fait du prémélange qui permet d'obtenir des conditions thermodynamique favorables d'auto-inflammation du mélangé carburé obtenu après l'injection principale. Cet état de fait permet de réduire fortement le bruit de combustion à pleine charge.

On observe en effet sur la courbe C2 que la pression autour du moment de l'injection principale évolue de manière plus régulière que la courbe C1 de pression pour laquelle il n'y a pas de prémélange. Au surplus, la courbe de pression C2 est située au dessus de la courbe C1 pendant la phase de fonctionnement du moteur autour du point mort haut du piston 7. Notamment, après le passage du piston 7 au point mort haut, la courbe de pression C2 est constamment et régulièrement au dessus de la courbe de pression C1, ce qui permet d'obtenir une puissance développée par le moteur plus importante dans le cas d'un prémélange que sans.

On remarque, sur la courbe C3 représentant le dégagement d'énergie instantané dans un cas sans prémélange, un pic 31 important qui traduit la montée brutale de la pression, comme représenté sur la courbe C1, ce qui se traduit pas un bruit important dans l'habitacle. On peut voir sur la courbe C4, c'est-à-dire pour le cas avec prémélange que ce pic disparaît. On remarque aussi sur la courbe C3 un deuxième pic d'énergie 32 qui sur la courbe C4 est transformé en une bosse 43 plus étalée. Au final, comme représenté sur la courbe C8 qui est constamment au dessus de la courbe C7, on obtient avec un prémélange (courbe C8) un dégagement d'énergie intégré plus important que pour un cas sans prémélange, ce qui traduit l'augmentation de la puissance développée par le moteur.

Bien entendu, le moment d'émission de la commande électrique de l'ouverture de l'injecteur 15 est adapté pour tenir compte du décalage entre ce moment d'émission de la commande électrique et l'injection effective de carburant dans la chambre de combustion 6 de manière à caler le moment où a lieu la combustion du mélange carburé avec le moment (c'est-à-dire l'angle du vilebrequin) où les conditions thermodynamiques sont les plus favorables à l'auto-inflammation du mélange carburé.

En effet, il est nécessaire d'obtenir un bon calage de la combustion, c'est-à-dire de déterminer l'instant exact où le mélange carburé va s'enflammer automatiquement, de manière à ce que cette combustion se fasse notamment lorsque la position du piston 7 a atteint sa position adéquate à l'instant où le mélange carburé possède toutes les caractéristiques physiques et chimiques requises pour s'enflammer automatiquement.

La présente invention n'est nullement limitée au mode de réalisation décrit et représenté, mais l'homme du métier saura y apporter toute variante conforme à son esprit.

Ce procédé d'injection est appliqué de manière préférentielle aux moteurs de type diesel pour lesquels le mélange carburé est enflammé par compression, mais il peut aussi être utilisé pour les moteurs à essence fonctionnant suivant un mode de combustion baptisé Contrôle de l'Auto Inflammation (C.A.I).

En variante, on peut prévoir que l'injection auxiliaire ait lieu en phase d'admission et/ou comprenne plusieurs phases d'injection entrecoupées. De même on peut prévoir que l'injection principale, toujours postérieure à l'injection auxiliaire, comprenne plusieurs phases d'injection entrecoupées.

## Revendications

1. Procédé d'injection de carburant dans au moins un cylindre (5) d'un moteur à combustion interne comprenant une étape d'admission et une étape de compression au cours de l'une et/ou l'autre desquelles on réalise au moins une injection auxiliaire de carburant de manière à former un prémélange homogène du carburant injecté avec l'air admis dans le cylindre (5), suivie d'une injection principale de carburant dans le cylindre (5) pour former un mélange carburé prêt à l'allumage, **caractérisé en ce que** l'injection auxiliaire de carburant est réalisée uniquement à pleine charge, à l'exclusion des faibles charges et charges partielles.

2. Procédé d'injection de carburant selon la revendication précédente, **caractérisé en ce que**, pour des conditions de fonctionnement données du moteur, on injecte une quantité totale de carburant égale à la somme des quantités de carburant injectées lors de l'injection auxiliaire et de l'injection principale, cette quantité totale engendrant un certain niveau d'émissions polluantes et étant supérieure à la quantité de carburant qui devrait être injectée en l'absence d'injection auxiliaire pour engendrer le même niveau d'émissions polluantes.

3. Procédé d'injection de carburant selon l'une des revendications précédentes, **caractérisé en ce que**, le moteur comportant un piston (7) coulissant dans le cylindre (5) et associé à un système de bielle (8) et de manivelle (9) relié à un vilebrequin (10) en rotation, l'injection auxiliaire est réalisée pour un angle (ALPHA) de vilebrequin (10) compris entre 200° et 300° par référence au point mort haut du piston (7).

4. Procédé d'injection de carburant selon l'une des revendications précédentes, **caractérisé en ce que** la quantité de carburant injectée lors de l'injection auxiliaire est comprise entre 10 et 25 % de la quantité de carburant injectée lors de l'injection principale.

5. Procédé d'injection de carburant selon l'une des revendications précédentes, **caractérisé en ce que** la richesse du prémélange issu de l'injection auxiliaire est comprise entre 0,10 et 0,20.

6. Procédé d'injection de carburant selon l'une des revendications précédentes, **caractérisé en ce que** l'injection principale est réalisée au moyen d'un injecteur (15) débouchant dans le cylindre (5).

7. Procédé d'injection de carburant selon la revendication précédente, **caractérisé en ce que** l'injection auxiliaire est réalisée au moyen dudit injecteur (15) débouchant dans le cylindre (5).

8. Procédé d'injection de carburant selon la revendication 6, **caractérisé en ce que**, un conduit d'admission (11) d'air débouchant dans le cylindre (5), l'injection auxiliaire est réalisée au moyen d'un autre injecteur situé dans le conduit d'admission (11) d'air.

9. Procédé d'injection de carburant selon l'une des revendications précédentes, **caractérisé en ce que** l'injection auxiliaire comprend plusieurs phases d'injection entrecoupées.

10. Procédé d'injection de carburant selon l'une des revendications précédentes, **caractérisé en ce que** l'injection principale comprend plusieurs phases d'injection entrecoupées.

11. Procédé d'injection de carburant selon l'une des revendications précédentes, **caractérisé en ce que** l'injection auxiliaire est réalisée en phase d'admission.
